Europäisches Patentamt

European Patent Office

Office européen des brevets

(11) Publication number: 0 492 031 A1

## EUROPEAN PATENT APPLICATION

(21) Application number: 90830610.3

(22) Date of filing: 21.12.90

(51) Int. Cl.⁵: F24D 17/00, F28D 9/04,
F28G 1/14, F28G 1/00,
F28G 7/00

(43) Date of publication of application:
01.07.92 Bulletin 92/27

(84) Designated Contracting States:
AT BE CH DE DK ES FR GB GR IT LI LU NL SE

(71) Applicant: INNOVAZIONI TECNOLOGICHE DI
FLAVIO DAL BO
Via XX Settembre 4
I-10051 Avigliana (Torino)(IT)

(72) Inventor: Dal Bo, Flavio c/o Innovazioni
Tecnologiche di
Flavio Dal Bo Via XX Settembre 4
I-10051 Avigliana (Torino)(IT)
Inventor: Palazzetti, Mario c/o Innovazioni
Tecnologiche
di Flavio Dal Bo, Via XX Settembre 4
I-10051 Avigliana (Torino)(IT)

(74) Representative: Buzzi, Franco et al
c/o Jacobacci-Casetta & Perani S.p.A. Via
Alfieri, 17
I-10121 Torino(IT)

(54) A heat recuperation device for sanitary installations.

㊄ The device comprises:
- a liquid-liquid heat exchanger (12) with a primary circuit (12a) interposed between a water supply main (R) and the sanitary apparatus (L) and a secondary circuit (12b) interposed between a drain (S) and the drainage system (F),
- a circulating pump (14) interposed between the drain (S) of the sanitary apparatus (L) and the secondary circuit (12b) of the exchanger (12), and
- flow sensor devices (24, 62) arranged upstream of the sanitary apparatus (L) for controlling the circulating pump (14).

The present invention relates to a heat-recovery device for sanitary apparatus having a drain to a drainage system.

In sanitary apparatus normally used in dwellings (wash-basins, showers, baths, washing machines, etc.) the hot water used in the apparatus is discharged directly into the drainage system with a heat capacity substantially unchanged from that supplied to the apparatus.

The object of the present invention is to provide a simple and cheap heat-recovery device which reduces the heat energy required by sanitary apparatus.

According to the invention, this object is achieved by virtue of the fact that the device comprises a liquid-liquid heat exchanger with a primary circuit interposed between a water supply main and the sanitary apparatus and a secondary circuit interposed between the drain and the drainage system, a circulating pump interposed between the drain of the sanitary apparatus and the secondary circuit of the exchanger and flow sensor means arranged upstream of the sanitary apparatus for controlling the circulating pump.

By virtue of these characteristics, the heat of the water supplied to the sanitary apparatus by normal hot-water systems is not wasted upon discharge but enables the cold water supply to be preheated. The heating load on the hot-water system is thus reduced.

The heat-recovery device according to the invention is particularly advantageous if it is combined with a thermostatically-controlled heater, for example, an electric heater arranged between the heat exchanger and the sanitary apparatus. In this case, the heater raises the temperature of the water preheated by the exchanger to the desired level. The thermostat enables the water to be kept at the desired temperature not only during its supply, but also when the flow is interrupted. When the water flow is subsequently restarted, the presence of hot water in the heater reduces the waiting time before hot water is supplied to the sanitary apparatus.

The heat exchanger used in the recovery device is preferably a spiral exchanger.

The use of such an exchanger achieves a perfect counterflow of the cold and hot fluids, increasing the heat-exchange coefficient.

Further advantages and characteristics of the device according to the invention will become clear from the following detailed description, provided purely by way of non-limiting example, with reference to the appended drawings, in which:

Figure 1 is a schematic view of a device according to the invention,

Figure 2 is a schematic cross-section of the exchanger used in the device of Figure 1,

Figure 3 is a side view of the exchanger of Figure 2,

Figure 4 is a schematic view showing a variant of the device in a configuration for cleaning the secondary circuit of the exchanger,

Figure 5 is a view of the device of Figure 4 in its normal operating configuration,

Figure 6 is a longitudinal section of a second type of spiral exchanger usable in the device according to the invention,

Figure 7 is a section taken on the line VII-VII of Figure 6,

Figure 8 is a section taken on the line VIII-VIII of Figure 6,

Figure 9 is a view taken on the arrow IX of Figure 6,

Figure 10 is a section taken on the arrow X-X of Figure 9,

Figure 11 is a section taken on the line XI-XI of Figure 9, and

Figure 12 is a schematic view of a further embodiment of the device according to the invention.

With reference to the drawings, a heat-recovery device, generally indicated 10, is associated with a wash-basin L. The device 10 includes a spiral heat exchanger 12 comprising a primary circuit 12a to which cold water is supplied from the main R and a secondary circuit 12b which is supplied with the water from the drain S of the wash-basin L with the interposition of a circulating pump 14 and the outlet of which is connected to a drainage system F. The primary circuit 12a has a first inlet 16 and a first outlet 18, whilst the secondary circuit 12b has a second inlet 20 and a second outlet 22. Upstream of the first inlet 16 of the exchanger 12 are a flowmeter 24 and a supply tap 26. The flowmeter 24 controls, by means of an electrical circuit 28, the operation of the centrifugal pump 14 which is driven by an electric motor.

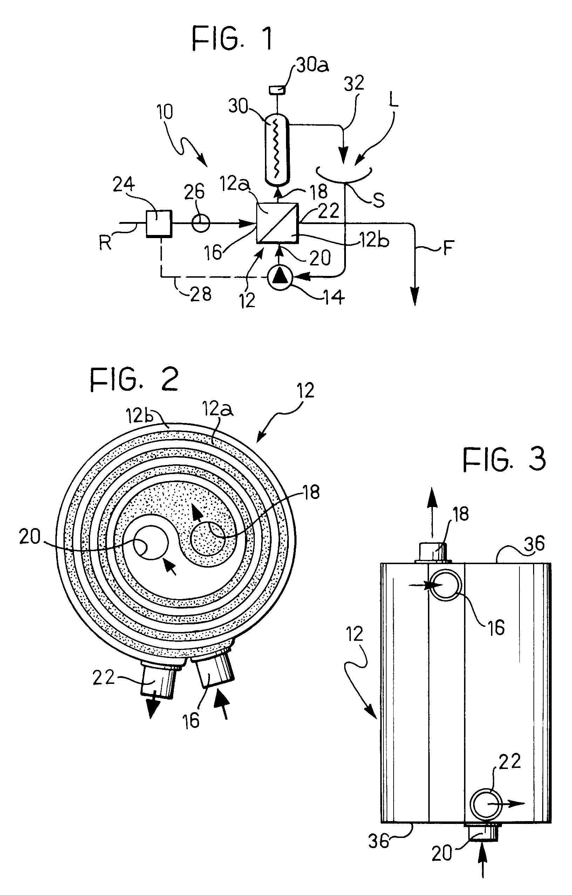

The first outlet 18 of the exchanger 12 is connected to an electric heater 30 of known type which has a thermostat 30a and is adapted to supply the wash-basin L at 32. The heater 30, which is in the form of a small water heater, brings the body of water in the heater to the desired temperature; when the supply tap 26 is turned on, the flowmeter 24 activates the pump 14 which circulates the hot liquid in the secondary circuit 12b of the exchanger to preheat the cold water coming from the main R before it is sent to the heater 30. The arrangement shown schematically in Figure 1 allows the device to be brought into operation in a few seconds, enabling an instantaneous supply of water at the desired temperature when the tap 26 is subsequently turned on.

As well as overcoming the small heads of water at the outlets of sanitary apparatus, the circulation pump 14 also has the function of increasing the flow rate in the secondary circuit 12b, which enables the dimensions of the heat exchanger 12 to be reduced or the efficiency of a heat exchanger of given dimensions to be increased.

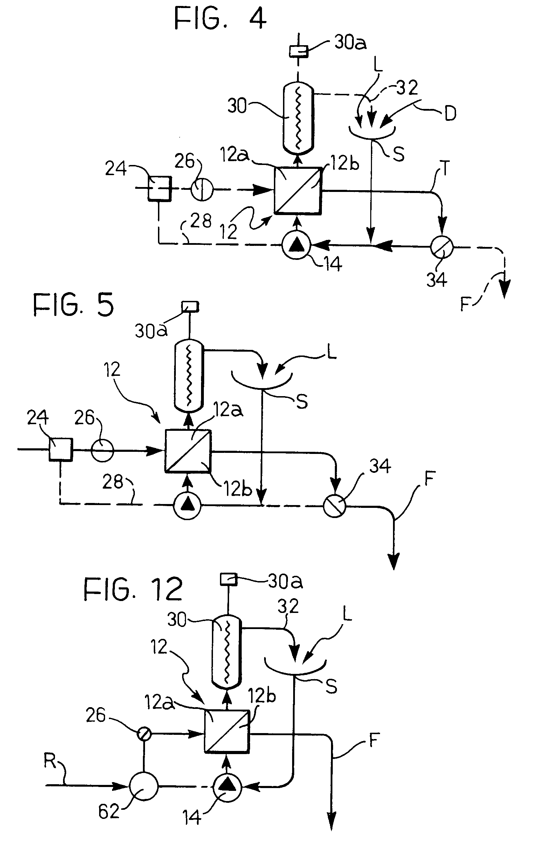

The use of the circulating pump 14 also enables the secondary circuit 12b of the exchanger 12 to be short-circuited (Figure 4) by means of a three-way valve 34 which is inserted in a drain pipe T connected to the second outlet 22 of the exchanger 12 and, in one of its two configurations, is adapted to recirculate the liquid to the pump 14 to enable the exchanger 12 to be cleaned by suitable detergent liquids D. The embodiment of the device shown in Figure 4 has a suitable switch (not shown) for switching on the circulating pump 14, even in the absence of a signal from the flowmeter 24, to permit this cleaning operation. In order to return to the normal operating mode, it suffices to operate the three-way valve 34 as shown in Figure 5.

Figures 2 and 3 show the spiral exchanger 12 used in a first embodiment of the invention which is particularly suitable for use with the recirculation system for cleaning the secondary circuit. In the drawings, the primary circuit is the one which is shaded. The construction of the heat exchanger 12 in this embodiment differs from the construction of normal spiral exchangers only in that it has smaller dimensions.

This kind of exchanger is particularly suitable for the transfer of heat between waters which are reasonably clean so that the exchanger, which is sealed, does not need to be dismantled.

As an alternative to cleaning with liquid detergents D, one of the two closure flanges of the exchanger, indicated 36 in Figure 3, may be fitted with an ultrasound generator (not shown) whose frequency and intensity are such as to prevent substances suspended in the water from being deposited in the secondary circuit 12b. To advantage, the ultrasound generator is controlled by a switch associated with the flowmeter 24 connected in the primary circuit 12a.

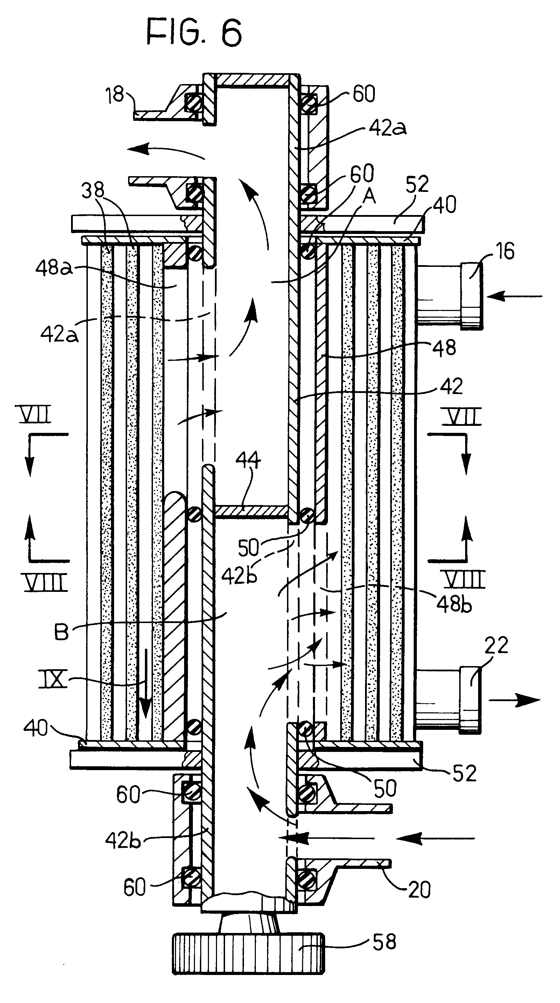

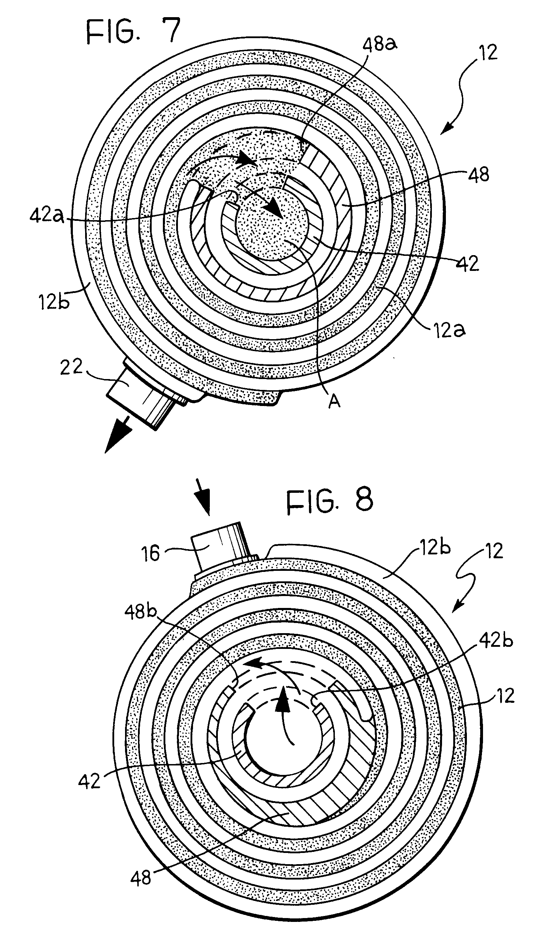

Figures 6-11 show a second embodiment of the exchanger 12 which is particularly suitable for applications in which the liquid circulating in the secondary circuit creates problems of scaling in the exchanger 12.

In this variant, the primary circuit is sealed by the welding at 38 of the side edges of the two plates which are rolled up into a spiral to form the heat-exchange surface. The secondary circuit is delimited at the ends of the exchanger by membranes 40 of deformable polymeric material, for example, Teflon, glued at 38 to the welded side edges of the primary circuit so as to define a closed space. The exchanger has a central tubular rod 42 divided into two chambers A and B by a partition 44 and having respective ends 42a and 42b projecting axially from the shell of the exchanger. The central tubular rod 42 has a first axial slot 42a for the passage of the primary liquid towards the first outlet 18 and, similarly, a second slot 42b for admitting the secondary liquid from the second inlet 20 to the exchanger. A tubular header 48 arranged outwardly of the rod 42 and coaxial therewith is separated from the outer surface of the rod 42 by sealing rings 50 of elastomeric material and has respective axial slots 48a and 48b. The sealing rings 50 define respective upper and lower portions of the header 48 and enable the flow to be divided correctly.

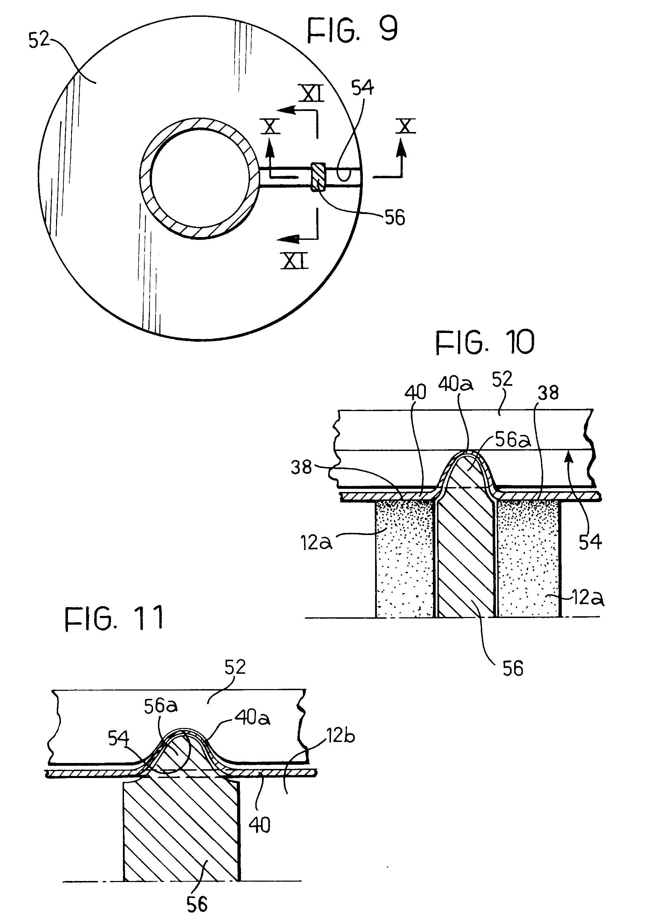

Two discs 52 with central holes for the passage of the rod 42 are fixed to the central tubular rod 42 in contact with the membranes 40. As shown in Figure 9, each disc 52 has a shaped radial groove 54 in its surface which faces the respective membrane 40 for housing a deformed portion 40a of the membrane 40 which is acted on by shaped ends 56a of a rectangular bar 56 for cleaning the walls of the secondary circuit 12b of the exchanger. This cleaning is achieved by the rotation of the discs 52 by means of a lower knob 58 keyed to the tubular rod 42 which can rotate relative to the second inlet connector 20 and the first outlet connector 18 by virtue of the interposition of elastomeric sealing rings 60. Clearly, the rotation of the discs 52 moves the cleaning bar 56 along the secondary circuit between two rest positions in which it is arranged so as not to interfere with the flow in the secondary circuit. The structure for housing and supporting the shell of the exchanger is not shown in Figure 6 for the sake of clarity.

In operation, the primary liquid from the first inlet 16 flows in the sealed space of the primary circuit in the opposite sense from the secondary liquid until it passes through the slot 48a to the first chamber A of the rod 42 from which it emerges at the first outlet 18. The secondary liquid admitted through the second inlet 20 is supplied to the second chamber B of the rod 42 from which it emerges through the slot 42b into the annular chamber between the rod and the header 48. From this chamber, the secondary liquid flows through the slot 48b and the respective circuit and is discharged from the second outlet 22.

An electric motor may be used instead of the knob 58 for operating the rod 42 for the periodic cleaning of the secondary circuit; end-of-travel switches operated by the cleaning bar 56 could be associated with the electric motor.

Figure 12 shows a further embodiment of the device according to the invention in which the circulating pump 14 is driven by a hydraulic motor 62 in the water supply main R instead of by an electric motor. In this embodiment, the energy requirements of the device as a whole are further reduced, if the mains pressure is sufficient.

If a heater 30 is provided, it may, to advantage, be integrated in the central portion of the spiral exchanger so as considerably to reduce the bulk of the recovery device and to enable its insulation to be improved.

## Claims

1.  A heat-recovery device for sanitary apparatus having a drain to a drainage system, characterised in that it comprises:
    - a liquid-liquid heat exchanger (12) with a primary circuit (12a) interposed between a water supply main (R) and the sanitary apparatus (L) and a secondary circuit (12b) interposed between the drain (S) and the drainage system (F),
    - a circulating pump (14) interposed between the drain (s) of the sanitary apparatus (L) and the secondary circuit (12b) of the exchanger (12), and
    - flow sensor means (24, 62) arranged upstream of the sanitary apparatus (L) for controlling the circulating pump (14).

2.  A device according to Claim 1, characterised in that a thermostatically-controlled heater (30) is interposed between the heat exchanger (12) and the sanitary apparatus (L).

3.  A device according to Claim 1 or Claim 2, characterised in that the heat exchanger is a spiral exchanger (12).

4.  A device according to any one of the preceding claims, characterised in that it includes a three-way valve (34) arranged downstream of the secondary circuit (12b) of the exchanger (12) for recirculating the liquid in the secondary circuit to enable it to be cleaned by detergent liquids (D).

5.  A device according to Claim 3, characterised in that, in the exchanger (12):
    - the primary circuit (12a) is sealed laterally at the edges of two adjacent rolled-up plates,
    - the secondary circuit (12b) is defined by the space between the coils of the sealed primary circuit (12a) and a pair of deformable end membranes (40) fixed sealingly to the sealed edges (38) of the primary circuit (12a),
    - a pair of discs (52) with central holes are arranged in contact with the end membranes (40),
    - the surface of each disc (52) which faces the respective end membrane (40) has at least one radial groove (54),
    - a cleaning bar (56) is inserted axially in the secondary circuit (12b) and has ends (56a) which are fitted in the grooves (54) and are adapted to deform the end membranes (40a, 40) locally,
    - a central hollow rod (42) with a central wall (44) is keyed to the discs (52) and is formed with an inlet (20) for the secondary circuit (12b) and an outlet (18) for the primary circuit (12a) of the exchanger (12),
    - means (58) are provided for rotating the central rod (42) and the discs (52) in order to move the cleaning bar (56) within the secondary circuit (12b).

6.  A device according to any one of the preceding claims, characterised in that the flow sensor means comprise a flowmeter (24) arranged upstream of the supply tap (26) of the sanitary apparatus (L) and connected electrically to the electric pump (14).

7.  A device according to any one of Claims 1-5, characterised in that the flow sensor means comprise a hydraulic turbine (62) in the supply to the sanitary apparatus (L) for controlling the pump (14).

8.  A device according to any one of Claims 3-7, characterised in that the heater (30) is arranged within the exchanger (12), substantially in correspondence with the outlet (18) of the primary circuit (12a) of the exchanger (12).

9.  A device according to Claim 3, characterised in that an ultrasound generator is associated with one of the two flanges of the exchanger.

# FIG. 1

# FIG. 2

# FIG. 3

# FIG. 4

# FIG. 5

# FIG. 12

# FIG. 6

FIG. 7

FIG. 8

FIG. 9

52

54

XI

X

X

56

XI

FIG. 10

40  40a  52  38

38

56a

12a

54

12a

56

FIG. 11

52

56a

54  40a  12b

56  40

European Patent Office

**EUROPEAN SEARCH REPORT**

Application Number

EP 90 83 0610

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | DE-A-3 521 980 (ALBERTS)<br>* the whole document *<br>--- | 1,2 | F24D17/00<br>F28D9/04<br>F28G1/14<br>F28G1/00<br>F28G7/00 |
| A | GB-A-2 069 126 (APPLEGATE)<br>* abstract *<br>--- | 1,2 | |
| A | GB-A-2 160 628 (TRITON AQUATHERM LIMITED)<br>* abstract *<br>--- | 1,2 | |
| A | FR-A-1 171 345 (ROBERT BOSCH GMBH)<br>* figure 5 *<br>----- | 1,3 | |
| | | | **TECHNICAL FIELDS SEARCHED (Int. Cl.5 )**<br><br>F24D<br>F28D<br>F28G |

The present search report has been drawn up for all claims

| Place of search | Date of completion of the search | Examiner |
|---|---|---|
| THE HAGUE | 21 AUGUST 1991 | VAN GESTEL H.M. |

EPO FORM 1503 03.82 (P0401)